(19) Europäisches Patentamt
European Patent Office
Office européen des brevets

(11)     EP 2 495 273 B1

(12)     EUROPEAN PATENT SPECIFICATION

(45) Date of publication and mention
of the grant of the patent:
**05.07.2017   Bulletin 2017/27**

(51) Int Cl.:
*C08J 3/12* [(2006.01)]          *C08J 3/11* [(2006.01)]
*H01M 4/62* [(2006.01)]         *C08L 27/16* [(2006.01)]
*H01G 11/56* [(2013.01)]

(21) Application number: **10826801.2**

(22) Date of filing: **28.10.2010**

(86) International application number:
**PCT/JP2010/069134**

(87) International publication number:
**WO 2011/052669 (05.05.2011 Gazette 2011/18)**

(54) **METHOD FOR PRODUCING HEAT-TREATED VINYLIDENE FLUORIDE POLYMER POWDER**

VERFAHREN ZUR HERSTELLUNG VON WÄRMEBEHANDELTEM
VINYLIDENFLUORIDPOLYMERPULVER

PROCÉDÉ DE FABRICATION DE POUDRE DE POLYMÈRE À BASE DE FLUORURE DE
VINYLIDÈNE TRAITÉE THERMIQUEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2009  JP 2009250651**

(43) Date of publication of application:
**05.09.2012   Bulletin 2012/36**

(73) Proprietor: **Kureha Corporation
Chuo-ku
Tokyo 103-8552 (JP)**

(72) Inventors:
• **IGARASHI, Tamito
Tokyo
1038552 (JP)**
• **SAKABE, Hiroshi
Tokyo 103-8552 (JP)**

• **SUGAWARA, Emi
Tokyo 103-8552 (JP)**
• **MUTOU, Shintarou
Tokyo 103-8552 (JP)**

(74) Representative: **BRP Renaud & Partner mbB
Rechtsanwälte Patentanwälte
Steuerberater
Königstraße 28
70173 Stuttgart (DE)**

(56) References cited:
**EP-A2- 1 279 693          WO-A1-02/088227
WO-A1-2009/047969     WO-A1-2009/047969
JP-A- 4 020 534            JP-A- 4 282 559
JP-A- 4 282 559            JP-A- 7 295 271
JP-A- 7 295 271            JP-A- 10 298 298
JP-A- 2003 055 467**

**Description**

TECHNICAL FIELD

The present invention relates to a process for producing heat-treated vinylidene fluoride polymer powder used in power storage device electrode slurry. In detail, the invention relates to a process for producing heat-treated vinylidene fluoride polymer powder which exhibits excellent dispersibility and solubility in aprotic polar solvents such as N-methyl-2-pyrrolidone.

BACKGROUND ART

A vinylidene fluoride polymer solution that is obtained by dissolving vinylidene fluoride polymer powder in N-methyl-2-pyrrolidone (hereinafter, also referred to as NMP) is used as a binder for lithium ion secondary battery.
In general, the binding force of vinylidene fluoride polymer powder serving as a binder increases with increasing molecular weight of the polymer. However, a polymer having a higher molecular weight requires a longer time to be dissolved in NMP, thereby deteriorating the productivity.
The reasons why the dissolution takes a long time include the facts that vinylidene fluoride polymer particles themselves become less soluble with increasing molecular weight and such vinylidene fluoride polymer particles adhere to each other in NMP so as to form large masses (hereinafter, also referred to as lumps).
In particular, because lumps prevent NMP from penetrating through the inside of lumps, the formation of lumps in NMP causes a very long time for vinylidene fluoride polymer powder to be dissolved in NMP.
A known method for dissolving a vinylidene fluoride polymer is to disperse vinylidene fluoride polymer powder in a poor solvent and thereafter stir the dispersion in a good solvent so as to dissolve the polymer (see, for example, Patent Literature 1). According to the method described in Patent Literature 1, acetone, tetrahydrofuran or the like is used as the poor solvent, and NMP or the like is used as the good solvent. The method disclosed in Patent Literature 1 is capable of dissolving a vinylidene fluoride polymer by a very simple technique. However, the method of Patent Literature 1 is complicated due to the need of dispersing vinylidene fluoride polymer powder in a poor solvent and thereafter stirring the dispersion in a good solvent, and tends to be unsatisfactory in terms of productivity. This literature also discloses an embodiment in which the poor solvent is removed from the vinylidene fluoride polymer solution. However, performing such a step of removing the poor solvent adds costs.
Porous vinylidene fluoride polymer powder is known to exhibit excellent solubility in NMP (see, for example, Patent Literature 2). The vinylidene fluoride polymer powder disclosed in Patent Literature 2 can be obtained by a supercritical suspension polymerization method having a step of suspending a vinylidene fluoride monomer and a step of performing supercritical polymerization. However, because the vinylidene fluoride polymer powder described in Patent Literature 2 is not particularly designed so as to prevent the formation of lumps, lumps can be formed to cause a decrease in solubility when the vinylidene fluoride polymer powder is dispersed in a solvent in an inappropriate manner.

Citation List

Patent Literatures

    Patent Literature 1: JP-A-H10-298298
    Patent Literature 2: WO 2009/047969

SUMMARY OF INVENTION

Technical Problem

The present invention has been made in view of the problems in the art described above. It is therefore an object of the invention to provide a process for producing vinylidene fluoride polymer powder that exhibits higher solubility in aprotic polar solvents such as NMP than heretofore achieved.

Solution to Problem

The present inventors carried out studies in order to achieve the above object. They have then found that heat-treated vinylidene fluoride polymer powder that is obtained by heat treating raw vinylidene fluoride polymer powder under specific conditions exhibits excellent solubility with respect to aprotic polar solvents such as NMP. The present invention has been completed on the basis of this finding.

The invention refers to a process for producing heat-treated vinylidene fluoride (VdF) polymer powder used in power storage device electrode slurry, comprising heat treating raw VdF polymer powder at such a temperature that the temperature of the polymer powder is not less than 125°C to less than the crystal melting temperature (Tm) of the polymer, wherein the raw VdF polymer powder contains ≥ 90 mol% of VdF-derived monomer units, and has a median particle diameter of 50-230 pm.

The heat treatment time in the heat treatment is preferably 10 seconds to 20 hours.

The raw vinylidene fluoride polymer powder preferably has a weight average molecular weight of not less than 200000 as measured by gel permeation chromatography relative to polystyrenes.

A process for producing a vinylidene fluoride polymer solution includes dissolving heat-treated vinylidene fluoride polymer powder obtained by the aforementioned process into an aprotic polar solvent.

A process for producing a vinylidene fluoride polymer solution includes dissolving heat-treated vinylidene fluoride polymer powder obtained by the aforementioned process into N-methyl-2-pyrrolidone.

A process for producing a vinylidene fluoride polymer solution includes dissolving heat-treated vinylidene fluoride polymer powder obtained by the aforementioned process into N-methyl-2-pyrrolidone at a liquid temperature of 35 to 130°C.

A process for producing a power storage device electrode slurry includes mixing a vinylidene fluoride polymer solution obtained by any of the aforementioned processes together with an active substance.

A process for producing a power storage device electrode slurry includes mixing heat-treated vinylidene fluoride polymer powder obtained by the aforementioned process together with an active substance, and mixing the resultant mixture together with an aprotic polar solvent.

A process for producing a power storage device electrode includes applying a power storage device electrode slurry obtained by any of the above processes to a collector and drying the slurry.

Advantageous Effects of Invention

The heat-treated vinylidene fluoride polymer powder that is obtained by the inventive process for producing heat-treated vinylidene fluoride polymer powder exhibits higher solubility with respect to aprotic polar solvents such as NMP than conventional vinylidene fluoride polymer powders.

According to the processes for producing a vinylidene fluoride polymer solution, the heat-treated vinylidene fluoride polymer powder is used so as to enable easy dissolution of powder.

DESCRIPTION OF EMBODIMENTS

The present invention will be described in greater detail hereinbelow.

<Process for producing heat-treated vinylidene fluoride polymer powder>

The invention refers to a process for producing heat-treated vinylidene fluoride (VdF) polymer powder used in power storage device electrode slurry, comprising heat treating raw VdF polymer powder at such a temperature that the temperature of the polymer powder is not less than 125°C to less than the crystal melting temperature (Tm) of the polymer, wherein the raw VdF polymer powder contains ≥ 90 mol% of VdF-derived monomer units, and has a median particle diameter of 50-230 pm.

The heat-treated vinylidene fluoride polymer powder that is obtained by the inventive production process exhibits higher solubility with respect to aprotic polar solvents such as NMP than conventional vinylidene fluoride polymer powders.

In the heat treatment performed according to the invention, raw vinylidene fluoride polymer powder is treated by being held at such a temperature that the temperature of the vinylidene fluoride polymer powder is not less than 125°C to less than the crystal melting temperature (Tm) of the raw vinylidene fluoride polymer powder. Temporal heating such as flash drying raises the temperature of vinylidene fluoride polymer powder itself to a temperature that is lower than the temperature of the hot air. In contrast, the heat treatment in the present invention is not such a treatment that does not increase the temperature of vinylidene fluoride polymer powder to a sufficient level, but is a treatment in which the temperature of vinylidene fluoride polymer powder itself is in the range of not less than 125°C to less than the crystal melting temperature (Tm) of the raw vinylidene fluoride polymer powder.

[Raw vinylidene fluoride polymer powders]

The raw vinylidene fluoride polymer powder used in the invention will be described below. The raw vinylidene fluoride polymer powder in the invention is powder of a vinylidene fluoride polymer that has not been subjected to the heat treatment described later. Conventional vinylidene fluoride polymer powder may be used.

The raw vinylidene fluoride polymer powder used in the invention is not limited as long as the polymer has monomer units derived from vinylidene fluoride. The polymers having vinylidene fluoride-derived monomer units are not particularly limited. Examples of such polymers include vinylidene fluoride homopolymers, copolymers of vinylidene fluoride and a comonomer, modified vinylidene fluoride homopolymers, and modified copolymers of vinylidene fluoride and a comonomer. These polymers are usually used singly, but two or more kinds may be used in combination.

Examples of the comonomers include carboxyl group-containing monomers, carboxylic anhydride group-containing monomers, fluorine-containing monomers excluding vinylidene fluoride, and $\alpha$-olefins. The comonomers may be used singly, or two or more kinds may be used in combination.

Preferred examples of the carboxyl group-containing monomers include unsaturated monobasic acids, unsaturated dibasic acids, and monoesters of unsaturated dibasic acids, with unsaturated dibasic acids and monoesters of unsaturated dibasic acids being more preferable.

Examples of the unsaturated monobasic acids include acrylic acid. Examples of the unsaturated dibasic acids include maleic acid and citraconic acid. Preferred examples of the monoesters of unsaturated dibasic acids include those having 5 to 8 carbon atoms, such as monomethyl maleate, monoethyl maleate, monomethyl citraconate and monoethyl citraconate.

Of these, preferred carboxyl group-containing monomers are maleic acid, citraconic acid, monomethyl maleate and monomethyl citraconate.

Examples of the carboxylic anhydride group-containing monomers include unsaturated dibasic acid anhydrides. Examples of the unsaturated dibasic acid anhydrides include maleic anhydride and citraconic anhydride.

Examples of the fluorine-containing monomers excluding vinylidene fluoride include vinyl fluoride, trifluoroethylene, chlorotrifluoroethylene, tetrafluoroethylene and hexafluoropropylene.

Examples of the $\alpha$-olefins include ethylene, propylene and 1-butene.

Preferred examples of the copolymers of vinylidene fluoride and a comonomer(s) include vinylidene fluoride/monomethyl maleate copolymer and vinylidene fluoride/hexafluoropropylene/monomethyl maleate copolymer.

Such copolymers of vinylidene fluoride and a comonomer may be obtained by copolymerizing vinylidene fluoride and any of the aforementioned comonomers.

Vinylidene fluoride may be homopolymerized or copolymerized with a comonomer by any method without limitation. Exemplary polymerization methods include suspension polymerization, emulsion polymerization and solution polymerization.

The polymerization conditions such as polymerization temperature may be selected appropriately. In the case of suspension polymerization as an example, the polymerization temperature is usually in the range of 20 to 120°C, preferably 25 to 100°C, and most preferably 25 to 75°C. Powder of a vinylidene fluoride polymer obtained by suspension polymerization at a polymerization temperature of 25 to 75°C is preferable in that the use of such raw vinylidene fluoride polymer powder in the inventive production process tends to result in heat-treated vinylidene fluoride polymer powder that exhibits excellent solubility with respect to aprotic polar solvents such as NMP.

Preferred polymerization methods are suspension polymerization and emulsion polymerization which afford a polymer having vinylidene fluoride-derived monomer units in the form of powder. Suspension polymerization is more preferred. In the case where a polymerization method is adopted which affords a polymer having vinylidene fluoride-derived monomer units in the form of powder, the polymer may be directly used as the raw vinylidene fluoride polymer powder or may be classified by a method such as sieving so as to have a specific particle diameter. When a polymerization method is adopted which affords a polymer having vinylidene fluoride-derived monomer units in the form of bulk (mass), the polymer may be pulverized into the form of powder by, for example, freeze crushing using liquid nitrogen according to the disclosure in JP-A-H06-108103, and such powder may be used as the raw vinylidene fluoride polymer powder in the invention.

The modified vinylidene fluoride homopolymer or the modified copolymer of vinylidene fluoride and a comonomer may be obtained by modifying any of the vinylidene fluoride homopolymers or the copolymers of vinylidene fluoride and a comonomer. A preferred modification is the introduction of a monomer having a carboxyl group or a carboxylic anhydride group such as maleic acid or maleic anhydride.

The raw vinylidene fluoride polymer powder used in the invention has vinylidene fluoride-derived monomer units at not less than 90 mol%, and most preferably at not less than 95 mol% (wherein the total of all the monomer units is 100 mol%). Further, the raw vinylidene fluoride polymer powder preferably has monomer units derived from a monomer other than vinylidene fluoride at not more than 20 mol%, more preferably at not more than 10 mol%, and most preferably at not more than 5 mol% (wherein the total of all the monomer units is 100 mol%). If the monomer units derived from vinylidene fluoride represent less than 80 mol%, the raw vinylidene fluoride polymer powder is lowered in melting point and is apt to be fused during the heat treatment. In the event of fusion, the production generally becomes difficult. The amounts of the monomer units from vinylidene fluoride and the monomer units from other comonomers may be determined by any known method such as NMR, elemental analysis or an oxygen flask combustion method.

The raw vinylidene fluoride polymer powder used in the invention preferably has a weight average molecular weight of not less than 200000, more preferably not less than 300000, and most preferably not less than 500000 as measured by gel permeation chromatography (GPC) relative to polystyrenes. The upper limit of the polystyrene equivalent weight average molecular weight is not particularly limited. However, the weight average molecular weight is preferably not more than 4000000 from the viewpoint of the solubility of heat-treated vinylidene fluoride polymer powder obtained by the inventive production process with respect to aprotic polar solvents such as NMP.

The raw vinylidene fluoride polymer powder used in the invention preferably has a median diameter of 50 to 230 $\mu$m. This median diameter ensures that the obtainable heat-treated vinylidene fluoride polymer powder exhibits excellent solubility and handling properties. The median diameter means a particle diameter that is associated with the midpoint (50%) of a cumulative particle size distribution curve, and is otherwise referred to as 50% average particle diameter (dp50). In the present invention, the median diameter is determined on the basis of volume-based particle size distribution. That is, the median diameter is located at the midpoint between the two equal total volumes of particles having a particle diameter larger than the median diameter and of particles having a particle diameter smaller than the median diameter.

The raw vinylidene fluoride polymer powder used in the invention preferably has an inherent viscosity of 0.3 to 10 dl/g, and more preferably 1 to 5 dl/g. This inherent viscosity ensures that the obtainable heat-treated vinylidene fluoride polymer exhibits good mechanical properties and a solution of the polymer has excellent handling properties.

The raw vinylidene fluoride polymer powder used in the invention usually has a crystal melting temperature (Tm) of 130 to 180°C. The crystal melting temperature may be determined from a DSC curve obtained by differential scanning calorimetry (hereinafter, also referred to as DSC). In the case where the DSC curve shows a plurality of crystal melting peaks (endothermic peaks), the crystal melting temperature (Tm) is determined on the basis of the peak having the largest peak area.

Commercial raw vinylidene fluoride polymer powder may be used.

[Heat treatment]

In the inventive process for producing heat-treated vinylidene fluoride polymer powder, the raw vinylidene fluoride polymer powder is heat treated at such a temperature that the temperature of the polymer powder is not less than 125 °C to less than the crystal melting temperature (Tm) of the polymer.

The heat treatment in the invention is a treatment in which the raw vinylidene fluoride polymer powder is treated by being held at such a temperature that the temperature of the polymer powder is not less than 125°C to less than the crystal melting temperature (Tm) of the raw vinylidene fluoride polymer powder. Temporal heating such as flash drying raises the temperature of vinylidene fluoride polymer powder itself to a temperature that is lower than the temperature of the hot air. In contrast, the heat treatment in the present invention is not such a treatment that does not increase the temperature of vinylidene fluoride polymer powder to a sufficient level, but is a treatment in which the temperature of vinylidene fluoride polymer powder itself is in the range of not less than 125°C to less than the crystal melting temperature (Tm) of the raw vinylidene fluoride polymer powder.

As described above, the heat treatment temperature in the heat treatment is in the range of not less than 125°C to less than the crystal melting temperature (Tm) of the raw vinylidene fluoride polymer powder. The temperature is preferably not less than 130°C, more preferably not less than 135°C, and is preferably less than 180°C, more preferably not more than 160 °C. Temperatures in this range ensure that the heat-treated vinylidene fluoride polymer powder does not form lumps when being dissolved and exhibits excellent solubility.

In the heat treatment, the heat treatment time is not particularly limited but is usually 10 seconds to 20 hours, more preferably 60 seconds to 20 hours, and most preferably 60 seconds to 5 hours. The heat treatment time in the invention means the duration of time for which the temperature of the polymer powder itself is not less than 125°C to less than the crystal melting temperature (Tm). When the raw vinylidene fluoride polymer powder is held in a hot air circulation furnace or a Henschel mixer, the temperature of the polymer powder itself is lower than the temperature of the hot air circulation furnace or the like (the heating temperature) immediately after the polymer powder is placed into the hot air circulation furnace. In the present invention, the heat treatment time does not mean the duration of time which starts when the polymer powder is introduced into the hot air circulation furnace or the like and for which the polymer powder is held therein, but means the duration of time for which the polymer powder is held at a temperature of the polymer powder itself from 125°C to less than the crystal melting temperature (Tm).

The atmosphere in which the heat treatment is carried out is not particularly limited. For example, the heat treatment may be carried out in an air atmosphere or a nitrogen atmosphere. Further, the heat treatment may be performed under any of reduced pressure, increased pressure or atmospheric pressure, but is usually carried out under atmospheric pressure.

The heat treatment may be performed by any method without limitation. For example, the treatment may be carried out using a hot air circulation furnace, a Henschel mixer or a gear oven. In the case where the heat treatment is carried out in a hot air circulation furnace, a method may be adopted in which a box containing the raw vinylidene fluoride polymer powder is placed in the hot air circulation furnace. In the case where the heat treatment is carried out using a Henschel mixer, a method may be adopted in which the raw vinylidene fluoride polymer powder is added into the Henschel mixer and heated while being stirred.

[Heat-treated vinylidene fluoride polymer powder]

Heat-treated vinylidene fluoride polymer powder that is obtained by the inventive production process exhibits higher solubility with respect to aprotic polar solvents such as NMP than the raw vinylidene fluoride polymer powder.

There is a plurality of indicators for evaluating solubility. For example, solubility may be evaluated excellent when vinylidene fluoride polymer powder is added to NMP at room temperature and the vinylidene fluoride polymer powder is dispersed in the NMP, compared to when such vinylidene fluoride polymer powder forms lumps. According to another indicator, solubility may be evaluated to be higher as vinylidene fluoride polymer powder requires a shorter stirring time to be dissolved in NMP which has been heated at a specific temperature (for example, 50°C).

Preferably, dissolving the heat-treated vinylidene fluoride polymer powder in an aprotic polar solvent results in a transparent vinylidene fluoride polymer solution. However, it is often the case that a translucent solution is obtained. Even such a translucent solution of the heat-treated vinylidene fluoride polymer powder may be used as a power storage device electrode slurry in order to form a power storage device electrode without causing any problems.

(Process for producing vinylidene fluoride polymer solution)

A process for producing a vinylidene fluoride polymer solution includes dissolving heat-treated vinylidene fluoride polymer powder obtained by the aforementioned process for producing heat-treated vinylidene fluoride polymer powder into an aprotic polar solvent.

According to the process for producing a vinylidene fluoride polymer solution, the vinylidene fluoride polymer powder that is used is the heat-treated vinylidene fluoride polymer powder described hereinabove, thereby enabling quicker dissolution than when conventional vinylidene fluoride polymer powder is dissolved in an aprotic polar solvent.

Examples of the aprotic polar solvents include N-methyl-2-pyrrolidone, dimethylformamide and dimethylacetamide, with N-methyl-2-pyrrolidone being preferred.

In the production of a vinylidene fluoride polymer solution, the amount of the aprotic polar solvent is not particularly limited but is usually in the range of 400 to 10000 parts by weight, and preferably 550 to 2400 parts by weight with respect to 100 parts by weight of the heat-treated vinylidene fluoride polymer powder.

A vinylidene fluoride polymer solution is usually produced by adding the heat-treated vinylidene fluoride polymer powder into an aprotic polar solvent and stirring the mixture.

In the process for producing a vinylidene fluoride polymer solution, it is preferable that the heat-treated vinylidene fluoride polymer powder be dissolved into an aprotic polar solvent at a liquid temperature of 35 to 130°C. It is more preferable that the heat-treated vinylidene fluoride polymer powder be dissolved into N-methyl-2-pyrrolidone at a liquid temperature of 35 to 130°C. When N-methyl-2-pyrrolidone is used as the aprotic polar solvent, the liquid temperature is particularly preferably in the range of 45 to 80°C from the viewpoint of the solubility of the heat-treated vinylidene fluoride polymer powder.

The heat-treated vinylidene fluoride polymer powder may be dissolved into an aprotic polar solvent at a liquid temperature of 35 to 130°C in a manner such that the heat-treated vinylidene fluoride polymer powder is added to an aprotic polar solvent which has been heated to 35 to 130 °C and dissolved in the solvent, such that the heat-treated vinylidene fluoride polymer powder is added to an aprotic polar solvent at room temperature and the mixture is heated to 35 to 130°C by a heater or the like so as to dissolve the polymer powder, or such that the heat-treated vinylidene fluoride polymer powder is added to an aprotic polar solvent at room temperature and the mixture is stirred at a high speed with a homogenizer, a disperser mixer or the like so as to heat the mixture to 35 to 130°C by shear heating and thereby dissolve the polymer powder.

Alternatively, the heat-treated vinylidene fluoride polymer powder may be dissolved into an aprotic polar solvent by using a homogenizer, a disperser mixer, a propeller blade stirrer, T. K. FILMIX manufactured by PRIMIX Corporation, ultrasonic vibration or similar means. As required, the device may be fitted with a heater jacket or the like.

(Process for producing power storage device electrode slurry)

A process for producing a power storage device electrode slurry includes mixing a vinylidene fluoride polymer solution obtained by the aforementioned process for producing a vinylidene fluoride polymer solution together with an active substance (a first process), or includes mixing heat-treated vinylidene fluoride polymer powder obtained by the aforementioned process for producing heat-treated vinylidene fluoride polymer powder together with an active substance, and mixing the resultant mixture together with an aprotic polar solvent (a second process).

Examples of power storage devices include nonaqueous electrolyte secondary batteries (for example, lithium ion polymer secondary batteries) and electric double layer capacitors. In particular, the power storage device electrode slurry may be preferably used in the production of a positive electrode of nonaqueous electrolyte secondary battery.

In the first process, the vinylidene fluoride polymer solution is mixed together with an active substance to give an electrode slurry. The mixing may be performed using a device such as a planetary mixer, a kneader, an internal mixer or T. K. FILMIX manufactured by PRIMIX Corporation.

In the second process, the heat-treated vinylidene fluoride polymer powder is mixed together with an active substance to give a mixture. The mixing may be performed using a device such as a planetary mixer, a paddle mixer, a Henschel mixer or a ribbon mixer. In the second process, the obtained mixture is mixed together with an aprotic polar solvent, and this mixing may be carried out using a device such as a planetary mixer, a kneader, an internal mixer or T. K. FILMIX manufactured by PRIMIX Corporation.

The aprotic polar solvent used in the second process may be similar to the aprotic polar solvent described in (Process for producing vinylidene fluoride polymer solution). The amount of the aprotic polar solvent used in the second process is not particularly limited but is usually in the range of 400 to 10000 parts by weight, and preferably 550 to 2400 parts by weight with respect to 100 parts by weight of the heat-treated vinylidene fluoride polymer powder.

The amount of the active substance used in the processes for producing a power storage device electrode slurry is not particularly limited but is usually in the range of 100 to 10000 parts by weight, and preferably 900 to 6400 parts by weight with respect to 100 parts by weight of the heat-treated vinylidene fluoride polymer powder used in the production of the vinylidene fluoride polymer solution (the first process) or 100 parts by weight of the heat-treated vinylidene fluoride polymer powder (the second process).

Examples of the active substances include carbon materials, metal and alloy materials and metal oxides. Of these, metal oxides are preferable.

(Process for producing power storage device electrode)

A process for producing a power storage device electrode includes applying a power storage device electrode slurry obtained by the above process for producing a power storage device electrode slurry to a collector and drying the slurry.

Examples of the collectors include copper, aluminum, nickel and gold. Exemplary forms of collectors include metal foils and metal meshes.

The power storage device electrode slurry is applied to at least one surface, and preferably both surfaces of the collector. The application methods are not particularly limited, and examples thereof include bar coating, die coating and comma coating.

After the slurry is applied, it is dried usually at a temperature of 50 to 150°C for 1 to 300 minutes. The pressure during the drying is not particularly limited. However, the drying is usually carried out at atmospheric pressure or reduced pressure.

EXAMPLES

The present invention will be described in detail by presenting examples hereinbelow without limiting the scope of the invention.

Vinylidene fluoride polymer powders described later, and heat-treated vinylidene fluoride polymer powders obtained in Examples and Comparative Examples were tested by the following methods to evaluate properties.

[DSC measurement]

Vinylidene fluoride polymer powders described later were each analyzed by DSC using MDSC (Q100) manufactured by TA Instruments.

Approximately 2.0 mg of a sample (vinylidene fluoride polymer powder) was weighed on an aluminum sample pan. While nitrogen was flowed at a flow rate of 50 mL/min, the temperature was increased from 30°C to 230°C at a rate of 5°C/min. During the temperature increase, the temperature was modulated at $\pm 0.53$°C/40 sec. Using a software (Universal Analysis 2000) included with Q100, the data was analyzed with Integrate Peak Linear command so as to determine the crystal melting temperature (Tm).

[Measurement of inherent viscosity]

Vinylidene fluoride polymer powder weighing 4 g was added to 1 L of N,N-dimethylformamide and was dissolved therein at 80°C in 8 hours to give a vinylidene fluoride polymer solution. While the solution was held at 30 °C, the logarithmic viscosity was measured with an Ubbelohde viscometer. The inherent viscosity was determined from the following equation.

```
Inherent viscosity (logarithmic viscosity) [η] =

ln(ηrel)/C
```

wherein $\eta$rel = number of seconds required for sample solution to fall/number of seconds required for solvent to fall, and C = concentration of sample solution (0.4 g/dl).

[Evaluation of molecular weight by GPC]

The molecular weight of vinylidene fluoride polymer powder was determined in the following manner. An N-methyl-2-pyrrolidone solution of the vinylidene fluoride polymer powder having a concentration of 0.1% by weight was analyzed with a gel permeation chromatograph (GPC-900 manufactured by JASCO Corporation, Shodex KD-806M column, temperature: 40°C) in order to determine the weight average molecular weight relative to polystyrenes.

[Measurement of particle diameter]

Vinylidene fluoride polymer powder weighing 0.5 g was sufficiently wetted with 1 g of ethanol and was mixed together with 9 g of water. The mixture was stirred. Thereafter, 0.6 g of a 1% diluted solution of "SN WET 366" manufactured by SAN NOPCO LIMITED was added, and the mixture was mixed sufficiently. The resultant mixture was analyzed with a particle size distribution analyzer (SALD-3000S) manufactured by Shimadzu Corporation in order to determine the median diameter (dp50).

[Evaluation of dispersion state]

NMP weighing 20 g was placed into a sample bottle having an inner diameter of 35 mm. While performing stirring with a stirrer chip (30 mm in length, 8 mm in central diameter, and 7 mm in edge diameter) at 400 rpm, 1 g of any of heat-treated vinylidene fluoride polymer powders that had been obtained in Examples and Comparative Examples described later (or vinylidene fluoride polymer powder in any of Comparative Examples 1 and 5 to 10) was added, followed by stirring for 1 minute.
When the vinylidene fluoride polymer particles were aggregated into masses having a size of about several mm, the powder was evaluated to cause "lumps". When the particles were dispersed with a size that was approximately the same as an individual particle or about several times the size of an individual particle, the powder was evaluated to be "dispersed".
The dispersion state was evaluated at room temperature (23°C).

[Evaluation of dissolution time]

After the dispersion state was evaluated, the sample bottle which contained the heat-treated vinylidene fluoride polymer powder from Example or Comparative Example (or the vinylidene fluoride polymer powder in any of Comparative Examples 1 and 5 to 10) and NMP was set in a water bath at 50°C. While continuously performing stirring at 400 rpm, the contents were visually observed and the completion of the dissolution of the vinylidene fluoride polymer powder was determined when there were no longer any solids or gels originating from the vinylidene fluoride polymer powder.
The phrase "when there were no longer any solids or gels originating from the vinylidene fluoride polymer powder" means that the dissolution was considered to complete when the system became a transparent solution as well as when the system formed a translucent solution without any solids or gels. Time was measured from when the bottle was set in the water bath until when the dissolution completed, thereby determining the dissolution time.

[Evaluation of solution state]

NMP weighing 20 g was placed into a sample bottle having an inner diameter of 35 mm. While performing stirring with a stirrer chip (30 mm in length, 8 mm in central diameter, and 7 mm in edge diameter) at 400 rpm, 1 g of any of heat-treated vinylidene fluoride polymer powders that had been obtained in Examples and Comparative Examples described later (or vinylidene fluoride polymer powder in any of Comparative Examples 1 and 5 to 10) was added, followed by stirring for 1 minute. Subsequently, the sample bottle containing the vinylidene fluoride polymer powder and NMP was set in a water bath which had been controlled at a predetermined temperature (40, 50, 60, 65 or 70°C). The powder was dissolved by being stirred for a sufficient time. The obtained solution was visually evaluated to be "transparent" when the solution was clear, to be "turbid" when the solution was translucent, or to have "precipitation" when the solution contained precipitates.

[Production Example 1]

(Production of vinylidene fluoride polymer powder (1))

A 2-L volume autoclave was charged with 1118 g of ion exchange water, 0.4 g of methylcellulose, 421 g of vinylidene fluoride monomer, 9 g of chlorotrifluoroethylene monomer, 2.5 g of diisopropyl peroxydicarbonate and 2.5 g of chlorofluorocarbon 225cb. Suspension polymerization was carried out at 28°C for 12 hours.
After the completion of the polymerization, the obtained polymer slurry was heat treated at 95°C for 30 minutes, dehydrated, washed with water, and dried at 80°C for 20 hours. Thus, vinylidene fluoride polymer powder (1) was obtained.
The obtained vinylidene fluoride polymer powder (1) had an inherent viscosity of 2.2 dl/g, a weight average molecular weight of 770000, a median diameter of 195 μm, and Tm of 171°C. The chlorine content in the vinylidene fluoride polymer powder (1) was analyzed in accordance with JIS K7229 to be 1.1 mol% in terms of chlorotrifluoroethylene monomer. That is, it was confirmed that the vinylidene fluoride polymer powder (1) contained 98.9 mol% of monomer units derived from vinylidene fluoride.

[Production Example 2]

(Production of vinylidene fluoride polymer powder (2))

A 2-L volume autoclave was charged with 1026 g of ion exchange water, 0.2 g of methylcellulose, 400 g of vinylidene fluoride monomer, 2.4 g of di-n-propyl peroxydicarbonate, 2.4 g of methanol and 5.5 g of ethyl acetate. Suspension polymerization was carried out at 26°C and subsequently at an elevated temperature of 40°C for 12 hours.
After the completion of the polymerization, the obtained polymer slurry was heat treated at 95°C for 30 minutes, dehydrated, washed with water, and dried. Thus, vinylidene fluoride polymer powder (2) was obtained. The drying was performed using a flash dryer under conditions such that the temperature of hot air was 140°C at the entrance and 80°C at the exit.
The obtained vinylidene fluoride polymer powder (2) had an inherent viscosity of 1.1 dl/g, a weight average molecular weight of 300000, a median diameter of 210 μm, and Tm of 173°C.

[Production Example 3]

(Production of vinylidene fluoride polymer powder (3))

A 2-L volume autoclave was charged with 1026 g of ion exchange water, 0.2 g of methylcellulose, 400 g of vinylidene fluoride monomer, 2.4 g of di-n-propyl peroxydicarbonate, 2.4 g of methanol and 2.0 g of ethyl acetate. Suspension polymerization was carried out at 26°C and subsequently at an elevated temperature of 40°C for 11 hours.
After the completion of the polymerization, the obtained polymer slurry was heat treated at 95°C for 30 minutes, dehydrated, washed with water, and dried. Thus, vinylidene fluoride polymer powder (3) was obtained. The drying was performed using a flash dryer under conditions such that the temperature of hot air was 140°C at the entrance and 80°C at the exit.
The obtained vinylidene fluoride polymer powder (3) had an inherent viscosity of 1.3 dl/g, a weight average molecular weight of 350000, a median diameter of 184 μm, and Tm of 173°C.

[Production Example 4]

(Production of vinylidene fluoride polymer powder (4))

A 2-L volume autoclave was charged with 1024 g of ion exchange water, 0.2 g of methylcellulose, 400 g of vinylidene fluoride monomer, 1.4 g of diisopropyl peroxydicarbonate, 1.4 g of chlorofluorocarbon 225cb and 3.0 g of ethyl acetate. Suspension polymerization was carried out at 26°C for 16 hours.

After the completion of the polymerization, the obtained polymer slurry was heat treated at 95°C for 30 minutes, dehydrated, washed with water, and dried. Thus, vinylidene fluoride polymer powder (4) was obtained. The drying was performed using a flash dryer under conditions such that the temperature of hot air was 140°C at the entrance and 80°C at the exit.

The obtained vinylidene fluoride polymer powder (4) had an inherent viscosity of 2.2 dl/g, a weight average molecular weight of 770000, a median diameter of 215 $\mu$m, and Tm of 173°C.

[Production Example 5]

(Production of vinylidene fluoride polymer powder (5))

A 2-L volume autoclave was charged with 1024 g of ion exchange water, 0.2 g of methylcellulose, 400 g of vinylidene fluoride monomer, 0.6 g of diisopropyl peroxydicarbonate, 0.6 g of chlorofluorocarbon 225cb and 1.9 g of ethyl acetate. Suspension polymerization was carried out at 26°C for 20 hours.

After the completion of the polymerization, the obtained polymer slurry was heat treated at 95°C for 30 minutes, dehydrated, washed with water, and dried. Thus, vinylidene fluoride polymer powder (5) was obtained. The drying was performed using a flash dryer under conditions such that the temperature of hot air was 140°C at the entrance and 80°C at the exit.

The obtained vinylidene fluoride polymer powder (5) had an inherent viscosity of 3.1 dl/g, a weight average molecular weight of 1100000, a median diameter of 220 $\mu$m, and Tm of 173°C.

In Examples and Comparative Examples, the following commercial vinylidene fluoride polymer powders were also used.

(Vinylidene fluoride polymer powder (6))

PVDF powder, sold under the trade name of Solef 6020, manufactured by Solvay Solexis was used as vinylidene fluoride polymer powder (6). Solef 6020 had an inherent viscosity of 1. 85 dl/g, a weight average molecular weight of 600000, a median diameter of 104 $\mu$m, and Tm of 170°C.

(Vinylidene fluoride polymer powder (7))

PVDF powder, sold under the trade name of Kynar HSV900, manufactured by Arkema Inc. was used as vinylidene fluoride polymer powder (7). Kynar HSV900 had an inherent viscosity of 1.0 dl/g, a weight average molecular weight of 660000, a median diameter of 5 $\mu$m, and Tm of 160°C.

The above vinylidene fluoride polymer powders (1) to (7) were not still heat treated at such a temperature that brought the temperature of the vinylidene fluoride polymer powder itself to 125°C or higher. That is, these powders correspond to the raw vinylidene fluoride polymer powders in the present invention.

[Example 1]

The vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 125°C. After the temperature of the vinylidene fluoride polymer powder (5) itself became 125°C, the polymer powder was maintained in the furnace for 5 hours. Thereafter, the closed box was removed from the hot air circulation furnace and was allowed to stand at room temperature to cool. Thus, heat-treated vinylidene fluoride polymer powder (1) was obtained.

The heat-treated vinylidene fluoride polymer powder (1) was tested by the aforementioned methods to determine the dispersibility, the dissolution time and the solution state.

[Example 2]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 130°C. After the temperature of the vinylidene fluoride polymer powder (5) itself became 125°C, the temperature was further elevated to 130°C in 5 minutes. The polymer powder was held at 130°C for 55 minutes. Thereafter, the closed box was removed from the hot air circulation furnace and was allowed to stand at room temperature to cool. Thus, heat-treated vinylidene fluoride polymer powder (2) was obtained.

The heat-treated vinylidene fluoride polymer powder (2) was tested by the aforementioned methods to determine the dispersibility, the dissolution time and the solution state.

[Example 3]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 130°C. After the temperature of the vinylidene fluoride polymer powder (5) itself became 125°C, the temperature was further elevated to 130°C in 5 minutes. The polymer powder was held at 130°C for 19 hours and 55 minutes. Thereafter, the closed box was removed from the hot air circulation furnace and was allowed to stand at room temperature to cool. Thus, heat-treated vinylidene fluoride polymer powder (3) was obtained.

The heat-treated vinylidene fluoride polymer powder (3) was tested by the aforementioned methods to determine the dispersibility, the dissolution time and the solution state.

[Example 4]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 135°C. After the temperature of the vinylidene fluoride polymer powder (5) itself became 125°C, the temperature was further elevated to 130 °C in 1 minute and still further to 135°C in 5 minutes. The polymer powder was held at 135°C for 54 minutes. Thereafter, the closed box was removed from the hot air circulation furnace and was allowed to stand at room temperature to cool. Thus, heat-treated vinylidene fluoride polymer powder (4) was obtained.

The heat-treated vinylidene fluoride polymer powder (4) was tested by the aforementioned methods to determine the dispersibility, the dissolution time and the solution state.

[Example 5]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 140°C. After the temperature of the vinylidene fluoride polymer powder (5) itself became 125°C, the temperature was further elevated to 130°C in 30 seconds, still further to 135°C in 48 seconds and thereafter to 140°C in 5 minutes. The polymer powder was held at 140°C for 53 minutes. Thereafter, the closed box was removed from the hot air circulation furnace and was allowed to stand at room temperature to cool. Thus, heat-treated vinylidene fluoride polymer powder (5) was obtained.

The heat-treated vinylidene fluoride polymer powder (5) was tested by the aforementioned methods to determine the dispersibility, the dissolution time and the solution state.

[Example 6]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 150°C. After the temperature of the vinylidene fluoride polymer powder (5) itself became 125°C, the temperature was further elevated to 130°C in 18 seconds, still further to 135°C in 24 seconds, thereafter to 140°C in 30 seconds and finally to 150°C in 6 minutes. The polymer powder was held at 150 °C for 52 minutes. Thereafter, the closed box was removed from the hot air circulation furnace and was allowed to stand at room temperature to cool. Thus, heat-treated vinylidene fluoride polymer powder (6) was obtained.

The heat-treated vinylidene fluoride polymer powder (6) was tested by the aforementioned methods to determine the dispersibility, the dissolution time and the solution state.

[Example 7]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 160°C. After the temperature of the vinylidene fluoride polymer powder (5) itself became 125°C, the temperature was further elevated to 130°C in 12 seconds, still further to 135°C in 18 seconds, thereafter to 140°C in 18 seconds, further to 150°C in 1 minute and finally to 160°C in 6 minutes. The polymer powder was held at 160°C for 52 minutes. Thereafter, the closed box was removed from the hot air circulation furnace and was allowed to stand at room temperature to cool. Thus, heat-treated vinylidene fluoride polymer powder (7) was obtained.

The heat-treated vinylidene fluoride polymer powder (7) was tested by the aforementioned methods to determine the dispersibility, the dissolution time and the solution state.

[Comparative Example 1]

The vinylidene fluoride polymer powder (5) obtained in Production Example 5 was tested by the aforementioned methods to determine the dispersibility, the dissolution time and the solution state.

The vinylidene fluoride polymer powder (5) from Production Example 5 which was not subjected to any heat treatment will be also referred to as vinylidene fluoride polymer powder (c1).

[Comparative Example 2]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 120°C. After the temperature of the vinylidene fluoride polymer powder (5) itself became 120°C, the polymer powder was held at 120 °C for 54 minutes. Thereafter, the closed box was removed from the hot air circulation furnace and was allowed to stand at room temperature to cool. Thus, heat-treated vinylidene fluoride polymer powder (c2) was obtained.

The heat-treated vinylidene fluoride polymer powder (c2) was tested by the aforementioned methods to determine the dispersibility, the dissolution time and the solution state.

[Comparative Example 3]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 120°C. After the temperature of the vinylidene fluoride polymer powder (5) itself became 120°C, the polymer powder was held at 120°C for 20 hours. Thereafter, the closed box was removed from the hot air circulation furnace and was allowed to stand at room temperature to cool. Thus, heat-treated vinylidene fluoride polymer powder (c3) was obtained.

The heat-treated vinylidene fluoride polymer powder (c3) was tested by the aforementioned methods to determine the dispersibility, the dissolution time and the solution state.

[Comparative Example 4]

Similarly to Example 1, the vinylidene fluoride polymer powder (5) weighing 10 g was placed into a kraft paper box 10 cm in width, 15 cm in length and 3 cm in height. The vinylidene fluoride polymer powder (5) was spread in the box in a uniform thickness.

The kraft paper box was closed with a kraft paper lid. The closed box was placed into a hot air circulation furnace (product name: Fine Oven DH410, manufactured by YAMATO SCIENTIFIC CO., LTD.) at 180°C. After the temperature of the vinylidene fluoride polymer powder (5) itself became 125°C, the temperature was further elevated to 130°C in 6 seconds, still further to 135°C in 6 seconds, thereafter to 140°C in 12 seconds, further to 150°C in 24 seconds, still further to 160 °C in 30 seconds, thereafter to 170 °C in 1 minute and finally to 180°C in 6 minutes. The polymer powder was held at 180°C for 51 minutes. Thereafter, the closed box was removed from the hot air circulation furnace and was allowed to stand at room temperature to cool. Thus, heat-treated vinylidene fluoride polymer powder (c4) was obtained.

The heat-treated vinylidene fluoride polymer powder (c4) was tested by the aforementioned methods to determine the dispersibility, the dissolution time and the solution state.

The heat treatment for the production of the heat-treated vinylidene fluoride polymer powder (c4) resulted in the fusion of the vinylidene fluoride polymer powder (5).

[Example 8]

Heat-treated vinylidene fluoride polymer powder (8) was obtained in the same manner as in Example 5, except that the vinylidene fluoride polymer powder (5) was replaced by the vinylidene fluoride polymer powder (1).

The heat-treated vinylidene fluoride polymer powder (8) was tested by the aforementioned methods to determine the dispersibility, the dissolution time and the solution state.

[Comparative Example 5]

The vinylidene fluoride polymer powder (1) obtained in Production Example 1 was tested by the aforementioned methods to determine the dispersibility, the dissolution time and the solution state.

The vinylidene fluoride polymer powder (1) from Production Example 1 which was not subjected to any heat treatment will be also referred to as vinylidene fluoride polymer powder (c5).

[Example 9]

A Henschel mixer, sold under the trade name of FM10B/I from NIPPON COKE & ENGINEERING CO., LTD., was provided.

The vinylidene fluoride polymer powder (5) weighing 1 kg was added to the Henschel mixer and was heated from 25°C to a temperature of 140°C at 5°C/min at a blade rotational speed of 1600 rpm.

During this process, after the temperature of the vinylidene fluoride polymer powder (5) itself became 125°C, the polymer powder was further heated to 130°C in 1 minute, still further to 135°C in 1 minute and finally to 140°C in 1 minute.

The polymer powder was sampled when its temperature reached 140°C. The sample was allowed to stand at room temperature to cool. Thus, heat-treated vinylidene fluoride polymer powder (9) was obtained.

The heat-treated vinylidene fluoride polymer powder (9) was tested by the aforementioned methods to determine the dispersibility, the dissolution time and the solution state.

[Example 10]

Heat-treated vinylidene fluoride polymer powder (10) was obtained in the same manner as in Example 5, except that the vinylidene fluoride polymer powder (5) was replaced by the vinylidene fluoride polymer powder (2).

The heat-treated vinylidene fluoride polymer powder (10) was tested by the aforementioned methods to determine the dispersibility, the dissolution time and the solution state.

[Comparative Example 6]

The vinylidene fluoride polymer powder (2) obtained in Production Example 2 was tested by the aforementioned methods to determine the dispersibility, the dissolution time and the solution state.

The vinylidene fluoride polymer powder (2) from Production Example 2 which was not subjected to any heat treatment will be also referred to as vinylidene fluoride polymer powder (c6).

[Example 11]

Heat-treated vinylidene fluoride polymer powder (11) was obtained in the same manner as in Example 5, except that the vinylidene fluoride polymer powder (5) was replaced by the vinylidene fluoride polymer powder (3).
The heat-treated vinylidene fluoride polymer powder (11) was tested by the aforementioned methods to determine the dispersibility, the dissolution time and the solution state.

[Comparative Example 7]

The vinylidene fluoride polymer powder (3) obtained in Production Example 3 was tested by the aforementioned methods to determine the dispersibility, the dissolution time and the solution state.
The vinylidene fluoride polymer powder (3) from Production Example 3 which was not subjected to any heat treatment will be also referred to as vinylidene fluoride polymer powder (c7).

[Example 12]

Heat-treated vinylidene fluoride polymer powder (12) was obtained in the same manner as in Example 5, except that the vinylidene fluoride polymer powder (5) was replaced by the vinylidene fluoride polymer powder (4).
The heat-treated vinylidene fluoride polymer powder (12) was tested by the aforementioned methods to determine the dispersibility, the dissolution time and the solution state.

[Comparative Example 8]

The vinylidene fluoride polymer powder (4) obtained in Production Example 4 was tested by the aforementioned methods to determine the dispersibility, the dissolution time and the solution state.
The vinylidene fluoride polymer powder (4) from Production Example 4 which was not subjected to any heat treatment will be also referred to as vinylidene fluoride polymer powder (c8).

[Example 13]

A Henschel mixer, sold under the trade name of FM10B/I from NIPPON COKE & ENGINEERING CO., LTD., was provided.
The vinylidene fluoride polymer powder (5) weighing 1 kg was added to the Henschel mixer and was heated from 25°C to a temperature of 130°C at 5°C/min at a blade rotational speed of 1600 rpm.
During this process, after the temperature of the vinylidene fluoride polymer powder (5) itself became 125°C, the polymer powder was further heated to 130°C in 1 minute.
The polymer powder was sampled when its temperature reached 130°C. The sample was allowed to stand at room temperature to cool. Thus, heat-treated vinylidene fluoride polymer powder (13) was obtained.
The heat-treated vinylidene fluoride polymer powder (13) was tested by the aforementioned methods to determine the dispersibility, the dissolution time and the solution state.

[Example 14]

Heat-treated vinylidene fluoride polymer powder (14) was obtained in the same manner as in Example 2, except that the vinylidene fluoride polymer powder (5) was replaced by the vinylidene fluoride polymer powder (6).
The heat-treated vinylidene fluoride polymer powder (14) was tested by the aforementioned methods to determine the dispersibility, the dissolution time and the solution state.

[Example 15]

Heat-treated vinylidene fluoride polymer powder (15) was obtained in the same manner as in Example 5, except that the vinylidene fluoride polymer powder (5) was replaced by the vinylidene fluoride polymer powder (6).
The heat-treated vinylidene fluoride polymer powder (15) was tested by the aforementioned methods to determine the dispersibility, the dissolution time and the solution state.

[Comparative Example 9]

The vinylidene fluoride polymer powder (6) was tested by the aforementioned methods to determine the dispersibility, the dissolution time and the solution state.

The vinylidene fluoride polymer powder (6) which was not subjected to any heat treatment will be also referred to as vinylidene fluoride polymer powder (c9).

[Example 16]

Heat-treated vinylidene fluoride polymer powder (16) was obtained in the same manner as in Example 6, except that the vinylidene fluoride polymer powder (5) was replaced by the vinylidene fluoride polymer powder (7).

The heat-treated vinylidene fluoride polymer powder (16) was tested by the aforementioned methods to determine the dispersibility, the dissolution time and the solution state.

[Comparative Example 10]

The vinylidene fluoride polymer powder (7) was tested by the aforementioned methods to determine the dispersibility, the dissolution time and the solution state.

The vinylidene fluoride polymer powder (7) which was not subjected to any heat treatment will be also referred to as vinylidene fluoride polymer powder (c10).

The results in Examples and Comparative Examples are described in Tables 1 and 2.

In Examples and Comparative Examples, when the heat treatment was performed using a hot air circulation furnace, the temperature of the vinylidene fluoride polymer powder itself was measured by means of a thermocouple which was inserted in the layer of the vinylidene fluoride polymer powder in the kraft paper box. When the heat treatment was carried out using a Henschel mixer, the temperature of the vinylidene fluoride polymer powder was measured by means of a thermocouple which was inserted in the polymer powder inside the Henschel mixer.

[Table 1]

Table 1

| | VDF polymer powder (raw material) | Heat treatment apparatus | Heat treatment conditions | | (Heat-treated) VDF polymer powder (product) | Dispersibility | Dissolution time at 50°C | Solution state | | | | | |
|---|---|---|---|---|---|---|---|---|---|---|---|---|---|
| | | | | | | | | 40°C | 50°C | 60°C | 65°C | 70°C |
| Ex. 1 | (5) | HACF* | 125°C | 5 h | (1) | Dispersed | 30 min | Turbid | Slightly turbid | Transparent | Transparent | Transparent |
| Ex. 2 | (5) | HACF | 125-130°C 130°C | 5 min 55 min | (2) | Dispersed | 35 min | Turbid | Transparent | Transparent | Transparent | Transparent |
| Ex. 3 | (5) | HACF | 125-130°C 130°C | 5 min 19h55min | (3) | Dispersed | 25 min | Turbid | Turbid | Transparent | Transparent | Transparent |
| Ex. 4 | (5) | HACF | 125-130°C 130-135°C 135°C | 1 min 5 min 54 min | (4) | Dispersed | 35 min | Turbid | Transparent | Transparent | Transparent | Transparent |
| Ex. 5 | (5) | HACF | 125-130°C 130-135°C 135-140°C 140°C | 30 s 48 s 5 min 53 min | (5) | Dispersed | 35 min | Turbid | Transparent | Transparent | Transparent | Transparent |
| Ex. 6 | (5) | HACF | 125-130°C 130-135°C 135-140°C 140-150°C 150°C | 18 s 24 s 30 s 6 min 52 min | (6) | Dispersed | 35 min | Turbid | Slightly turbid | Transparent | Transparent | Transparent |
| Ex. 7 | (5) | HACF | 125-130°C 130-135°C 135-140°C 140-150°C 150-160°C 160°C | 12 s 18 s 18 s 1 min 6 min 52 min | (7) | Dispersed | 35 min | Turbid Precipitation | Turbid | Transparent | Transparent | Transparent |
| Comp. Ex. 1 | (5) | None | None | None | (c1) | Lumps | 2.5 h | Transparent | Transparent | Transparent | Transparent | Transparent |
| Comp. Ex. 2 | (5) | HACF | 120°C | 54 min | (c2) | Lumps | 4.5 h | Turbid | Transparent | Transparent | Transparent | Transparent |

EP 2 495 273 B1

Table 1

| | VDF polymer powder (raw material) | Heat treatment apparatus | Heat treatment conditions | | (Heat-treated) VDF polymer powder (product) | Dispersibility | Dissolution time | Solution state | | | | |
|---|---|---|---|---|---|---|---|---|---|---|---|---|
| | | | | | | | at 50°C | 40°C | 50°C | 60°C | 65°C | 70°C |
| Comp. Ex. 3 | (5) | HACF | 120°C | 20 h | (c3) | Lumps | 6 h | Turbid | Transparent | Transparent | Transparent | Transparent |
| Comp. Ex. 4 | (5) | HACF | 125-130°C<br>130-135°C<br>135-140°C<br>140-150°C<br>150-160°C<br>160-170°C<br>170-180°C<br>180°C | 6 s<br>6 s<br>12 s<br>24 s<br>30 s<br>1 min<br>6 min<br>51 min | (c4) | Dispersed | Not dissolved | Turbid Precipitation | Turbid Precipitation | Turbid | Turbid | Transparent |
| *HACF: Hot air circulation furnace | | | | | | | | | | | | |

[Table 2]

Table 2

| | VDF polymer powder (raw material) | Heat treatment apparatus | Heat treatment conditions | | (Heat-treated) VDF polymer powder (product) | Dispersibility | Dissolution time at 50°C | Solution state | | | | | |
|---|---|---|---|---|---|---|---|---|---|---|---|---|---|
| | | | | | | | | 40°C | 50°C | 60°C | 65°C | 70°C |
| Ex. 8 | (1) | HACF* | 125-130°C 130-135°C 135-140°C 140°C | 30 s 48 s 5 min 53 min | (8) | Dispersed | 30 min | Transparent | Transparent | Transparent | Transparent | Transparent |
| Comp. Ex. 5 | (1) | None | None | None | (c5) | Lumps | 1.5 h | Transparent | Transparent | Transparent | Transparent | Transparent |
| Ex. 9 | (5) | Henschel mixer | 125-130°C 130-135°C 135-140°C | 1 min 1 min 1 min | (9) | Dispersed | 30 min | Turbid | Turbid | Transparent | Transparent | Transparent |
| Ex. 10 | (2) | HACF | 125-130°C 130-135°C 135-140°C 140°C | 30 s 48 s 5 min 53 min | (10) | Dispersed | 2 min | Turbid | Transparent | Transparent | Transparent | Transparent |
| Comp. Ex. 6 | (2) | None | None | None | (c6) | Lumps | 10 min | Transparent | Transparent | Transparent | Transparent | Transparent |
| Ex. 11 | (3) | HACF | 125-130°C 130-135°C 135-140°C 140°C | 30 s 48 s 5 min 53 min | (11) | Dispersed | 5 min | Turbid | Transparent | Transparent | Transparent | Transparent |
| Comp. Ex. 7 | (3) | None | None | None | (c7) | Lumps | 35 min | Transparent | Transparent | Transparent | Transparent | Transparent |

(continued)

| | VDF polymer powder (raw material) | Heat treatment apparatus | Heat treatment conditions | | (Heat-treated) VDF polymer powder (product) | Dispersibility | Dissolution time at 50°C | Solution state | | | | | |
|---|---|---|---|---|---|---|---|---|---|---|---|---|---|
| | | | | | | | | 40°C | 50°C | 60°C | 65°C | 70°C |
| Ex. 12 | (4) | HACF* | 125-130°C 130-135°C 135-140°C 140°C | 30 s 48 s 5 min 53 min | (12) | Dispersed | 20 min | Turbid | Slightly turbid | Transparent | Transparent | Transparent |
| Comp. Ex. 8 | (4) | None | None | None | (c8) | Lumps | 60 min | Transparent | Transparent | Transparent | Transparent | Transparent |
| Ex. 13 | (5) | Henschel mixer | 125-130°C | 1 min | (13) | Dispersed | 60 min | Turbid | Turbid | Transparent | Transparent | Transparent |
| Ex. 14 | (6) | HACF | 125-130°C 130°C | 5 min 55 min | (14) | Dispersed | 2 min | Transparent | Transparent | Transparent | Transparent | Transparent |
| Ex. 15 | (6) | HACF | 125-130°C 130-135°C 135-140°C 140°C | 30 s 48 s 5 min 53 min | (15) | Dispersed | 10 min | Transparent | Transparent | Transparent | Transparent | Transparent |
| Comp. Ex. 9 | (6) | None | None | None | (c9) | Lumps | 50 min | Transparent | Transparent | Transparent | Transparent | Transparent |
| Ex. 16 | (7) | HACF | 125-130°C 130-135°C 135-140°C 140-150°C 150°C | 18 s 24 s 30 s 6 min 52 min | (16) | Dispersed | 20 min | Turbid | Turbid | Turbid | Turbid | Turbid |
| Comp. Ex. 10 | (7) | None | None | None | (c10) | Lumps | 60 min | Turbid | Turbid | Turbid | Turbid | Turbid |

*HACF: Hot air circulation furnace

**Claims**

1. A process for producing heat-treated vinylidene fluoride (VdF) polymer powder suitable for use in a power storage device electrode slurry, comprising heat treating raw VdF polymer powder at such a temperature that the temperature of the polymer powder is not less than 125°C to less than the crystal melting temperature (Tm) of the polymer, wherein the raw VdF polymer powder contains ≥ 90 mol% of VdF-derived monomer units, and has a median particle diameter of 50-230 μm.

2. The process of Claim 1, wherein the duration of the heat treatment is 10 seconds to 20 hours.

3. The process of Claim 1 or 2, wherein the raw VdF polymer powder has a weight average molecular weight of ≥ 200,000, measured by GPC relative to polystyrenes.

**Patentansprüche**

1. Verfahren zur Herstellung von wärmebehandeltem Vinylidenfluorid- (VdF-) Polymerpulver, das zur Verwendung in einer Energiespeichervorrichtungs-Elektrodenaufschlämmung geeignet ist, umfassend das Wärmebehandeln von rohem VdF-Polymerpulver bei einer Temperatur, derart, dass die Temperatur des Polymerpulvers nicht weniger als 125 °C bis weniger als die Kristallschmelztemperatur (Tm) des Polymers beträgt, wobei das rohe VdF-Polymerpulver ≥ 90 Mol-% von VdF abgeleitete Monomereinheiten enthält und einen mittleren Teilchendurchmesser von 50-230 μm aufweist.

2. Verfahren nach Anspruch 1, wobei die Dauer der Wärmebehandlung 10 Sekunden bis 20 Stunden beträgt.

3. Verfahren nach Anspruch 1 oder 2, wobei das rohe VdF-Polymerpulver ein gewichtsdurchschnittliches Molekulargewicht von ≥ 200 000, durch GPC auf Polystyrole bezogen gemessen, aufweist.

**Revendications**

1. Procédé de production d'une poudre de polymère de fluorure de vinylidène (VdF) traitée à chaud pour l'utilisation dans une suspension d'électrode de dispositif de stockage d'énergie, comprenant le traitement thermique d'une poudre brute de polymère de VdF à une température telle que la température de la poudre de polymère ne soit pas inférieure à 125°C jusqu'à moins de la température de fusion cristalline (Tm) du polymère, où la poudre brute de polymère de VdF contient ≥ 90 % en mole de motifs monomères dérivés du VdF et présente un diamètre de particule moyen de 50 à 230 μm.

2. Procédé selon la revendication 1, dans lequel la durée du traitement thermique est de 10 secondes à 20 heures.

3. Procédé selon la revendication 1 ou 2, dans lequel la poudre brute de polymère de VdF présente un poids moléculaire moyen en poids de ≥ 200 000, mesuré par CPG par rapport aux polystyrènes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10298298 A
- WO 2009047969 A

- JP H06108103 A